# EUROPEAN PATENT APPLICATION

(11) **EP 4 852 586 A1**
(43) Date of publication of application: **09.12.2026**
(21) Application number: 24921457.8
(22) Date of filing: 23.09.2024
(51) Int. Cl.: H04W 72/231

(54) **SIGNALING RECEIVING METHOD, SIGNALING SENDING METHOD, APPARATUS, AND STORAGE MEDIUM**

(30) Priority: 02.02.2024 CN 202410165199
(71) Applicant: ZTE Corporation, Shenzhen, Guangdong 518057 (CN)
(72) Inventor: MA, Xuan, Shenzhen, Guangdong 518057 (CN); CHEN, Mengzhu, Shenzhen, Guangdong 518057 (CN); DAI, Jianqiang, Shenzhen, Guangdong 518057 (CN); XU, Jun, Shenzhen, Guangdong 518057 (CN); DAI, Bo, Shenzhen, Guangdong 518057 (CN)
(74) Representative: Vossius & Partner Patentanwälte Rechtsanwälte mbB
(86) International application number: PCT/CN2024/120485
(87) International publication number: WO 2025/161433

(57) **Abstract**

Provided are a signaling receiving method, a signaling transmitting method, an apparatus, and a storage medium. The signaling receiving method includes: receiving first signaling, the first signaling being configured to trigger transmission of at least one synchronization signal/physical broadcast channel block (SSB) on at least one secondary cell; and detecting the SSB on the at least one secondary cell based on the first signaling.

## Description

The present disclosure claims priority to the Chinese patent application No. 202410165199.7, filed on February 2, 2024, the entire contents of which are incorporated herein by reference in its entirety.

### FIELD

The present disclosure relates to the field of communication technologies, and in particular, to a signaling receiving method, a signaling transmitting method, an apparatus, and a storage medium.

### BACKGROUND

With the increasing development of wireless services, network scales keep expanding, accompanied by a continuous rise in device energy consumption. The high energy consumption of base stations has become one of the main reasons for the persistently high operating expense (OPEX) of operators.

### SUMMARY

In a first aspect, an embodiment of the present disclosure provides a signaling receiving method. The signaling receiving method includes:
receiving first signaling, the first signaling being configured to trigger transmission of at least one synchronization signal/physical broadcast channel block (SSB) on at least one secondary cell; and
detecting the SSB on the at least one secondary cell based on the first signaling.

In a second aspect, an embodiment of the present disclosure provides a signaling transmitting method. The signaling transmitting method includes:
transmitting first signaling, the first signaling being configured to trigger transmission of at least one synchronization signal/physical broadcast channel block (SSB) on at least one secondary cell.

In a third aspect, an embodiment of the present disclosure provides a communication apparatus. The communication apparatus includes:
a communication module, configured to receive first signaling, the first signaling being configured to trigger transmission of at least one synchronization signal/physical broadcast channel block (SSB) on at least one secondary cell; and
a processing module, configured to detect the SSB on the at least one secondary cell based on the first signaling.

In a fourth aspect, an embodiment of the present disclosure provides another communication apparatus. The communication apparatus includes:
a transmitting module, configured to transmit first signaling, the first signaling being configured to trigger transmission of at least one synchronization signal/physical broadcast channel block (SSB) on at least one secondary cell.

In a fifth aspect, an embodiment of the present disclosure provides yet another communication apparatus. The communication apparatus includes a processor. The processor, when executing a computer program, causes the signaling receiving method in the first aspect or the signaling transmitting method in the second aspect to be implemented.

In a sixth aspect, an embodiment of the present disclosure provides a computer-readable storage medium. The computer-readable storage medium includes computer instructions. The computer instructions, when executed, cause the signaling receiving method in the first aspect or the signaling transmitting method in the second aspect to be implemented.

In a seventh aspect, an embodiment of the present disclosure provides a computer program product including instructions. The computer program product, when running on a computer, causes the computer to implement the signaling receiving method in the first aspect or the signaling transmitting method in the second aspect.

### BRIEF DESCRIPTION OF THE DRAWINGS

In order to more clearly illustrate the technical solutions in the present disclosure, the accompanying drawings required by some embodiments of the present disclosure are briefly introduced below. Apparently, the accompanying drawings in the following description are merely accompanying drawings of some embodiments of the present disclosure. For those of ordinary skill in the art, other accompanying drawings may also be obtained according to these accompanying drawings.
FIG. 1 is a schematic diagram of an architecture of a communication system according to some embodiments.
FIG. 2 is a schematic flowchart of a signaling receiving method according to some embodiments.
FIG. 3 is a schematic structural diagram of a MAC CE according to some embodiments.
FIG. 4 is a schematic structural diagram of another MAC CE according to some embodiments.
FIG. 5 is a schematic structural diagram of yet another MAC CE according to some embodiments.
FIG. 6 is a schematic structural diagram of yet another MAC CE according to some embodiments.
FIG. 7 is a schematic structural diagram of yet another MAC CE according to some embodiments.
FIG. 8 is a schematic structural diagram of yet another MAC CE according to some embodiments.
FIG. 9 is a schematic structural diagram of yet another MAC CE according to some embodiments.
FIG. 10 is a schematic structural diagram of yet another MAC CE according to some embodiments.
FIG. 11 is a schematic structural diagram of yet another MAC CE according to some embodiments.
FIG. 12 is a schematic structural diagram of yet another MAC CE according to some embodiments.
FIG. 13 is a schematic structural diagram of yet another MAC CE according to some embodiments.
FIG. 14 is a schematic flowchart of a signaling transmitting method according to some embodiments.
FIG. 15 is a schematic structural diagram of a communication apparatus according to some embodiments.
FIG. 16 is a schematic structural diagram of another communication apparatus according to some embodiments.
FIG. 17 is a schematic structural diagram of yet another communication apparatus according to some embodiments.

### DETAILED DESCRIPTION OF EMBODIMENTS

Technical solutions in embodiments of the present disclosure are clearly and completely described in conjunction with the accompanying drawings in the embodiments of the present disclosure. Apparently, the described embodiments are only some embodiments rather than all the embodiments of the present disclosure. Based on the embodiments of the present disclosure, all other embodiments obtained by those of ordinary skill in art without creative work shall fall within the scope of protection of the present disclosure.

In the description of the present disclosure, unless otherwise specified, "/" means "or", for example, A/B may mean A or B. Herein, "and/or" is merely an association relationship for describing associated objects, and indicates that three relationships may exist. For example, A and/or B may indicate: only A, only B, or both A and B. In addition, "at least one" refers to one or more, and "a plurality of" refers to two or more. Expressions such as "first" and "second" do not limit the quantity and an execution order, nor do they define that the objects must be different.

It should be noted that in the present disclosure, expressions such as "exemplarily" or "for example" are used to indicate examples, illustrations, or descriptions. Any embodiment or design scheme described as "exemplarily" or "for example" in the present disclosure should not be interpreted as being more preferable or advantageous over other embodiments or design schemes. Exactly, the use of expressions such as "exemplarily" or "for example" is intended to present relevant concepts in a detailed manner.

In some technologies, transmission of an SSB on a secondary cell occupies part of energy consumption of a base station. If the transmission of the SSB is canceled, a greater energy saving gain may be provided to the base station. However, completely removing SSB transmission may cause a user terminal to fail to acquire synchronization information and implement automatic gain control and adjustment during or after the activation of the secondary cell. Therefore, how to transmit the SSB to reduce the energy consumption of the base station is an urgent problem to be solved.

Based on this, the present disclosure provides a signaling receiving method and a signaling transmitting method. In the foregoing methods, the SSB can be transmitted on demand through first signaling instead of being periodically transmitted. While meeting transmission requirements of the terminal, the energy consumption of the base station can be reduced, thereby reducing the cost for operators. Moreover, on-demand SSB transmission can improve the flexibility of SSB transmission, thereby improving a utilization efficiency of network resources.

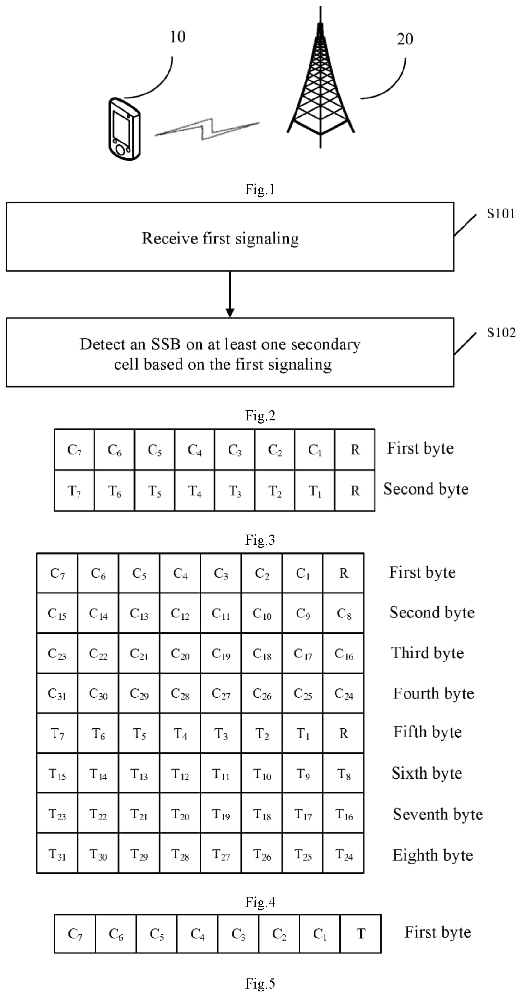

The signaling receiving method and the signaling transmitting method provided in the present disclosure may be applied to a communication system shown in FIG. 1. FIG. 1 illustrates a schematic diagram of an architecture of a communication system according to an embodiment of the present disclosure. As shown in FIG. 1, the communication system includes a terminal 10 and a base station 20.

In some embodiments, the terminal 10 may be a device with a wireless transceiving function, which may be deployed on land, including indoor or outdoor, handheld, wearable, or vehicle-mounted; or may also be deployed on a water surface (e.g., a ship); or may also be deployed in the air (e.g., an airplane, a balloon, or a satellite). The terminal 10 may be a mobile phone, a Pad, a computer with a wireless transceiving function, a virtual reality (VR) terminal, an augmented reality (AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of the present disclosure do not limit application scenarios. The terminal may be sometimes referred to as a user, user equipment (UE), an access terminal, a UE unit, a UE station, a mobile station, a mobile platform, a remote station, a remote terminal, a mobile device, a UE terminal, a wireless communication device, a UE agent, a UE apparatus, or the like. The embodiments of the present disclosure do not limit this.

In some embodiments, the base station 20 may be a base station in long term evolution (LTE) or long term evolution advanced (LTE-A) or an evolutional node B (eNB or eNodeB), a base station device in 5G networks, a base station in future communication systems, or the like. The base station may include various network-side devices such as various macro base stations, micro base stations, home base stations, remote radio units, reconfigurable intelligent surfaces (RISs), routers, and wireless fidelity (WIFI) devices.

It should be noted that FIG. 1 is only an exemplary framework diagram. The number of devices included in FIG. 1 and the names of the devices are not limited, and in addition to the devices shown in FIG. 1, the communication system may further include other devices (e.g., a core network device).

The embodiments of the present disclosure do not limit application scenarios. The system architecture and service scenarios described in the embodiments of the present disclosure are intended to more clearly describe the technical solutions of the embodiments of the present disclosure, and do not impose limitations on the technical solutions provided in the embodiments of the present disclosure. Those of ordinary skill in the art can know that with the evolution of network architecture and the emergence of new service scenarios, the technical solutions provided by the embodiments of the present disclosure are also applicable to similar technical problems.

FIG. 2 illustrates a schematic flowchart of a signaling receiving method according to an embodiment of the present disclosure. As shown in FIG. 2, the signaling receiving method is applied to the terminal 10 in FIG. 1, including the following steps:
S101: Receive first signaling.

The first signaling is configured to trigger transmission of at least one synchronization signal/physical broadcast channel block (SSB) on at least one secondary cell.

In some embodiments, the first signaling is secondary cell (SCell) activation signaling or SCell addition signaling.

In other embodiments, the first signaling is transmitted before the SCell activation signaling or the SCell addition signaling, and is configured to trigger SSB transmission on a neighbor cell or a deactivated secondary cell. In this way, the terminal can perform measurement in advance to obtain part of measurement information on the cell, and the measurement information may assist the base station in secondary cell selection and/or reduce the secondary cell activation delay.

In some embodiments, the first signaling includes at least one of the following: radio resource control (RRC) signaling, a media access control element (MAC CE), or downlink control information (DCI).

In some embodiments, the RRC signaling is secondary cell addition signaling, which is configured to add an SCell, and configure an SCell state to an activated state, so as to activate the SCell.

Accordingly, adding and activating the SCell through the RRC signaling can expand a network coverage range, reduce network congestion, and improve the communication experience of a user.

In other embodiments, the RRC signaling is reconfiguration signaling, which is configured to reconfigure an SSB transmission-related configuration of the secondary cell.

Accordingly, reconfiguring an SSB transmission-related configuration through the RRC signaling can improve configuration flexibility, and adaptation to different communication scenarios can be achieved by reconfiguring the SSB transmission-related configuration of the secondary cell.

In some embodiments, the MAC CE is one of an SCell activation/deactivation MAC CE or enhanced SCell activation/deactivation MAC CE.

The MAC CE is an existing MAC CE configured to activate or deactivate a secondary cell. The MAC CE includes at least one of the following: a reserved bit or a first bit field.

Exemplarily, the reserved bit is configured to indicate that SSB transmission is performed on the secondary cell to be activated. For example, in a case where a bit value of the reserved bit is "1", it indicates that SSB transmission is performed on the secondary cell to be activated; otherwise, SSB transmission on the secondary cell to be activated is not activated. For another example, in a case where the bit value of the reserved bit is "1", it indicates that SSB transmission is performed on the secondary cell to be activated; and in a case where the bit value of the reserved bit is "0", the indicated content may be determined according to actual situations, which is not limited in the present disclosure. For another example, in a case where the bit value of the reserved bit is "1", it indicates that on-demand SSB transmission is performed on the secondary cell to be activated.

In another example, the first bit field is configured to indicate that SSB transmission is performed on the secondary cell to be activated. The first bit field is a newly added bit field in the MAC CE, or the first bit field is a re-interpreted existing bit field in the MAC CE. For example, the first bit field includes 1 bit, and this 1 bit is configured to indicate whether SSB transmission is performed on the secondary cell activated by the MAC CE. For another example, the first bit field includes N bits, and N is a positive integer. Each of the N bits is configured to indicate whether SSB transmission is performed on one secondary cell activated by the MAC CE. Each of the N bits is sorted according to indexes of activated secondary cells. For example, the bits are sorted in ascending order of the indexes of the activated secondary cells. The bit corresponding to the activated secondary cell with the smallest index is arranged at the first position, and the bit corresponding to the activated secondary cell with the largest index is arranged at the last position.

In yet another example, the reserved bit is configured to indicate whether the first bit field exists. For example, a reserved bit of '1' indicates that the first bit field exists; or a reserved bit of '0' indicates that the first bit field does not exist or has a meaning reserved. For another example, a reserved bit of '1' indicates that the first bit field has a re-interpreted meaning; or a reserved bit of '0' indicates that the first bit field remains a meaning before re-interpretation. For example, when the reserved bit is '1', the first bit field indicates whether to activate SSB transmission on the corresponding secondary cell; or when the reserved bit is '0', the first bit field indicates whether to activate the corresponding secondary cell.

In this way, the MAC CE can indicate on-demand SSB transmission on the secondary cell to be activated, meeting requirements for secondary cell activation. In addition, through the reserved bit and/or the first bit field in the MAC CE, flexible control of different secondary cells can be implemented, thereby achieving the purposes of saving energy and improving flexibility.

In some embodiments, the MAC CE is a newly introduced MAC CE. Exemplarily, the MAC CE may be a new SCell activation/deactivation MAC CE. The MAC CE includes at least one of the following: a second bit field, a third bit field, a fourth bit field, a fifth bit field, a sixth bit field, or a reserved bit field.

Exemplarily, the second bit field is configured to indicate an activated or deactivated state of at least one secondary cell, including an activation indication or deactivation indication of the at least one secondary cell. The second bit field Cᵢ is configured to indicate an activated or deactivated state of a secondary cell with a secondary cell index (SCell index) i. For example, when Cᵢ is 1, it is configured to indicate that the secondary cell with the secondary cell index i is to be activated or is in the activated state. When Cᵢ is 0, it is configured to indicate that the secondary cell with the secondary cell index i is to be deactivated or is in the deactivated state.

In yet another example, the second bit field Cᵢ is configured to indicate whether a bit field associated with the secondary cell with the secondary cell index i exists, such as the third bit field and/or the fourth bit field. For example, when the second bit field Cᵢ is 1, it is configured to indicate that the secondary cell with the secondary cell index i is to be activated or is in the activated state, and the bit field associated with the secondary cell with the secondary cell index i exists, such as the third bit field and/or the fourth bit field. When the second bit field Cᵢ is 0, it is configured to indicate that no bit field associated with the secondary cell with the secondary cell index i exists, such as the third bit field and/or the fourth bit field. For another example, when the second bit field Cᵢ is 0, the terminal ignores the bit field associated with the secondary cell with the secondary cell index i, such as the third bit field and/or the fourth bit field.

In this way, the second bit field carried in the MAC CE can enable flexible control over an activation state of the secondary cell. Meanwhile, the second bit field can also indicate other bit fields associated with the secondary cell, thereby improving flexibility in a communication process.

Exemplarily, the third bit field is an activation or deactivation identifier. The activation or deactivation identifier includes an activation indication or a deactivation indication. The activation or deactivation indication is configured to indicate at least one of the following: activating or deactivating the associated secondary cell, or activating or deactivating SSB transmission on the associated secondary cell. For example, when the third bit field is set to "1", it is configured to indicate an activation operation, otherwise, it is configured to indicate a deactivation operation.

In yet another example, the third bit field includes 1 bit, which is configured to indicate to activate or deactivate the specified secondary cell, and/or whether to activate SSB transmission on the specified secondary cell. The specified secondary cell includes any one of the following: all secondary cells associated with the new SCell activation/deactivation MAC CE, or secondary cells to be activated that are associated with the new SCell activation/deactivation MAC CE.

In yet another example, the third bit field includes a plurality of bits. Each of the plurality of bits is associated with one secondary cell. For example, a bit Tᵢ is configured to indicate activation or deactivation of the secondary cell with the secondary cell index i, and/or indicate activation or deactivation of SSB transmission on the secondary cell with the secondary cell index i.

In this way, the third bit field carried by the MAC CE may flexibly indicate the activation or deactivation of each secondary cell and determine whether SSB transmission is performed, thereby achieving refined control over the secondary cell and improving communication flexibility and efficiency.

Exemplarily, the fourth bit field includes an identifier of at least one secondary cell, which may be configured to indicate an identity document (ID) of a serving cell or an index of a secondary cell.

In this way, through the fourth bit field carried by the MAC CE, the specified secondary cell can be accurately identified, which improves the accuracy of the MAC CE in indicating secondary cell activation or deactivation.

Exemplarily, the fifth bit field includes an indication of an SSB pattern, and the indication is an indication of the SSB transmission pattern. For example, the fifth bit field is configured to indicate an index of the SSB pattern, and the index of the SSB pattern is associated with a pattern of one SSB. For another example, the fifth bit field may include M bits, and M may be 1, 2, or 3. The SSB pattern includes at least one of the following: an SSB transmission period, a number of SSB repetitions, an SSB subcarrier spacing, an index of an actually transmitted SSB, or SSB transmit power.

In this way, through the fifth bit field carried by the MAC CE, flexible control of the SSB pattern may be achieved, and the SSB pattern can also be adjusted according to transmission requirements to meet different transmission requirements and improve transmission efficiency.

Exemplarily, the sixth bit field is configured to indicate whether there is an aperiodic positioning reference signal to be activated on the secondary cell to be activated. The sixth bit field may occupy one or more bytes, and each of the one or more bytes occupied by the sixth bit field is configured to indicate whether there is an aperiodic positioning reference signal to be activated on one secondary cell to be activated. The bytes in the sixth bit field may be sorted according to indexes of the indicated secondary cells, for example, sorted in ascending order of the indexes of the indicated secondary cells. The aperiodic positioning reference signal may be a tracking reference signal (TRS).

It should be understood that the sixth bit field exists in the MAC CE only when the MAC CE indicates activation of the secondary cell.

In this way, through the sixth bit field carried by the MAC CE, activation/transmission of the aperiodic positioning reference signal on the secondary cell can be dynamically triggered, which may reduce the activation delay of the secondary cell and improve network efficiency.

Exemplarily, the reserved bit field may include one or more bits.

As an implementation, the MAC CE may indicate SSB transmission on the secondary cell to be activated by carrying the second bit field, the third bit field, and the reserved bit field.

Exemplarily, as shown in FIG. 3, the MAC CE includes 2 bytes. The second bit field Cᵢ occupies part of bits in a first byte. The second bit field Cᵢ is configured to indicate activation or deactivation of the secondary cell with the secondary cell index i, and may indicate activation or deactivation of up to 7 secondary cells. The third bit field Tᵢ occupies part of bits in a second byte. The third bit field Tᵢ is configured to indicate whether to activate or deactivate SSB transmission on the secondary cell with the secondary cell index i, and can indicate SSB transmission on up to 7 secondary cells. The reserved bit field occupies 1 bit in the first byte and 1 bit in the second byte.

In yet another example, as shown in FIG. 4, the MAC CE includes 8 bytes. The second bit field Cᵢ occupies part of the bits in the first byte and all bits in a second byte, a third byte, and a fourth byte. The second bit field Cᵢ is configured to indicate activation or deactivation of the secondary cell with the secondary cell index i, and may indicate activation or deactivation of up to 31 secondary cells. The third bit field occupies part of bits in the fifth byte and all bits in the sixth byte, the seventh byte, and the eighth byte. The third bit field Tᵢ is configured to indicate whether to activate or deactivate SSB transmission on the secondary cell with the secondary cell index i, and may indicate SSB transmission on up to 31 secondary cells. The reserved bit field occupies 1 bit in the first byte and 1 bit in the fifth byte. When Cᵢ is 0, the terminal ignores the indication of Tᵢ in the third bit field.

As an implementation, the MAC CE may indicate SSB transmission on the secondary cell to be activated by carrying the second bit field and the third bit field.

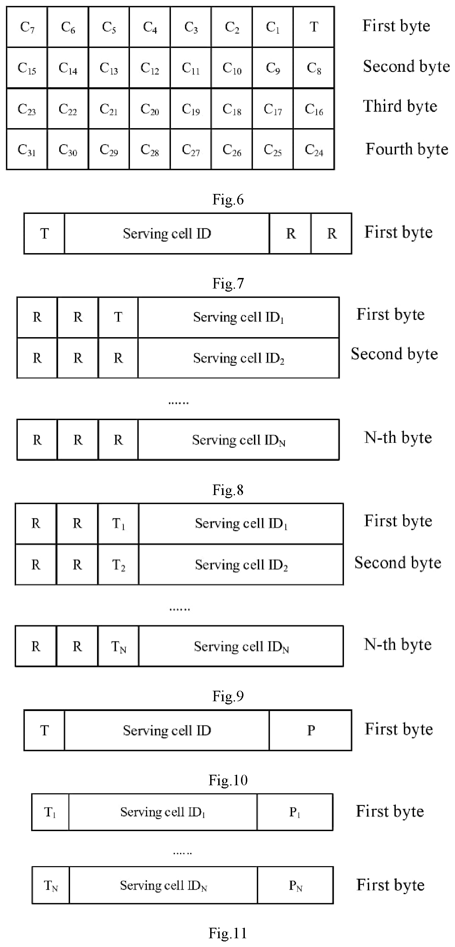

Exemplarily, as shown in FIG. 5, the MAC CE includes 1 byte. The second bit field occupies a plurality of bits in one byte, and each of the plurality of bits indicates activation or deactivation of one secondary cell. The third bit field occupies 1 bit, and is configured to indicate SSB transmission on all secondary cells associated with the MAC CE or secondary cells to be activated. Alternatively, as shown in FIG. 6, the MAC CE includes 4 bytes, the second bit field occupies a plurality of bits, and each of the plurality of bits indicates activation or deactivation of one secondary cell. The third bit field occupies 1 bit, which is configured to indicate SSB transmission on all secondary cells associated with the MAC CE or secondary cells to be activated.

As an implementation, the MAC CE may indicate SSB transmission on the secondary cell to be activated by carrying the third bit field, the fourth bit field, and the reserved bit field.

Exemplarily, as shown in FIG. 7, the MAC CE includes 1 byte, the third bit field occupies 1 bit, the fourth bit field occupies 5 bits, and the reserved bit field occupies 2 bits. The fourth bit field is configured to indicate a serving cell ID of the secondary cell to be activated, and the third bit field is configured to indicate whether to activate or deactivate the secondary cell indicated by the fourth bit field, and/or activate or deactivate SSB transmission on the secondary cell indicated by the fourth bit field.

In yet another example, as shown in FIG. 8, the MAC CE includes a plurality of bytes. The fourth bit field occupies 5 bits in each of the plurality of bytes, the fourth bit field is configured to indicate a secondary cell to be activated, and the fourth bit field includes a serving cell IDᵢ of the secondary cell to be activated. The third bit field T occupies 1 bit in the first byte. The third bit field T is configured to indicate whether to activate or deactivate the secondary cell indicated by the fourth bit field in the same byte, and/or indicate activation or deactivation of SSB transmission on the secondary cell indicated by the fourth bit field in the same byte. The reserved bit field occupies 2 bits in the first byte and 3 bits in each of other bytes.

In yet another example, as shown in FIG. 9, the MAC CE includes a plurality of bytes. The fourth bit field occupies 5 bits in each of the plurality of bytes, the fourth bit field is configured to indicate a secondary cell to be activated, and the fourth bit field includes a serving cell IDᵢ of the secondary cell to be activated. The third bit field Tᵢ occupies 1 bit in each of the plurality of bytes. The third bit field Tᵢ is configured to indicate whether to activate or deactivate the secondary cell indicated by the fourth bit field in the same byte, and/or indicate activation or deactivation of SSB transmission on the secondary cell indicated by the fourth bit field in the same byte. The reserved bit field occupies 2 bits in each of the plurality of bytes.

As an implementation, the MAC CE may indicate SSB transmission on the secondary cell to be activated by carrying the third bit field, the fourth bit field, and the fifth bit field.

Exemplarily, as shown in FIG. 10, the MAC CE includes 1 byte. The third bit field T is configured to indicate whether to activate or deactivate the secondary cell indicated by the fourth bit field in the same byte, and/or indicate activation or deactivation of SSB transmission on the secondary cell indicated by the fourth bit field in the same byte. The fourth bit field is configured to indicate a secondary cell to be activated, and the fourth bit field includes a serving cell IDᵢ of the secondary cell to be activated. The fifth bit field P includes an indication of the SSB pattern of the secondary cell indicated by the fourth bit field. The third bit field occupies 1 bit, the fourth bit field occupies 5 bits, and the fifth bit field occupies 1 bit.

In yet another example, as shown in FIG. 11, the MAC CE includes a plurality of bytes. In each byte, the third bit field Tᵢ is configured to indicate whether to activate or deactivate the secondary cell indicated by the fourth bit field in the same byte, and/or indicate activation or deactivation of SSB transmission on the secondary cell indicated by the fourth bit field in the same byte. The fourth bit field is configured to indicate a secondary cell to be activated, and the fourth bit field includes a serving cell ID of the secondary cell to be activated. The fifth bit field Pi includes an indication of the SSB pattern of the secondary cell indicated by the fourth bit field. The third bit field occupies 1 bit, the fourth bit field occupies 5 bits, and the fifth bit field occupies 1 bit.

As an implementation, the MAC CE may indicate SSB transmission on the secondary cell to be activated by carrying the third bit field, the fourth bit field, and the sixth bit field.

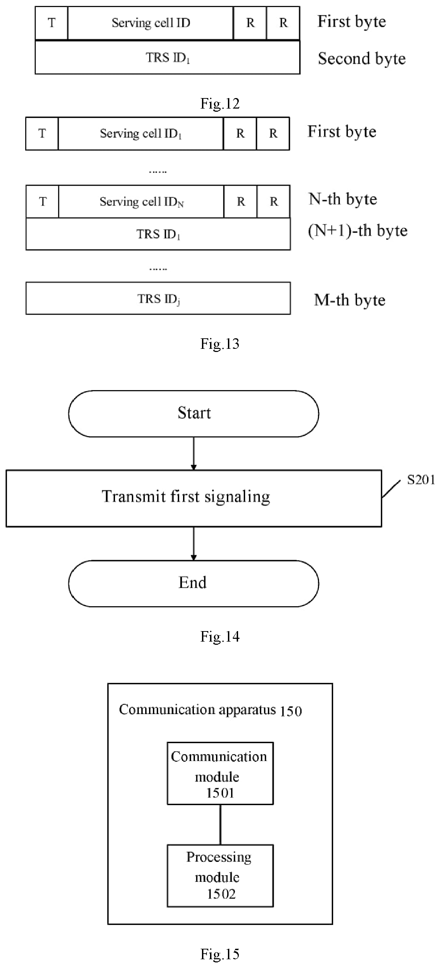

Exemplarily, as shown in FIG. 12, the MAC CE includes 2 bytes. The fourth bit field occupies 5 bits in the first byte, the fourth bit field is configured to indicate a secondary cell to be activated, and the fourth bit field includes a serving cell ID of the secondary cell to be activated. The third bit field T occupies 1 bit in the first byte. The third bit field T is configured to indicate whether to activate or deactivate the secondary cell indicated by the fourth bit field in the same byte, and/or indicate activation or deactivation of SSB transmission on the secondary cell indicated by the fourth bit field in the same byte. The reserved bit field occupies 2 bits in the first byte. The sixth bit field occupies all bits in the second byte, and the sixth bit field is configured to indicate an identifier (TRS ID₁) of an aperiodic tracking reference signal on the secondary cell indicated by the fourth bit field.

In yet another example, as shown in FIG. 13, the MAC CE includes a plurality of bytes. The fourth bit field occupies 5 bits in each of the first N bytes, the fourth bit field is configured to indicate a secondary cell to be activated, and the fourth bit field includes a serving cell ID of the secondary cell to be activated. The third bit field T occupies 1 bit in each of the first N bytes. The third bit field Tᵢ is configured to indicate whether to activate or deactivate the secondary cell indicated by the fourth bit field in the same byte, and/or indicate activation or deactivation of SSB transmission on the secondary cell indicated by the fourth bit field in the same byte. The reserved bit field occupies 2 bits in each of the first N bytes. The sixth bit field occupies all bits from an (N+1)-th byte to an M-th byte. Each byte occupied by the sixth bit field includes an identifier of an aperiodic tracking reference signal (TRS) on one secondary cell indicated by the fourth bit field.

It should be noted that the MAC CE includes the corresponding sixth bit field only when the secondary cell indicated by the fourth bit field is activated. The plurality of bytes included in the sixth bit field are sorted according to the identifiers of the aperiodic tracking reference signals (TRSs) indicated by the fourth bit field, and for example, may be sorted in ascending order of the identifiers of the aperiodic tracking reference signals (TRSs).

S102: Detect the SSB on the at least one secondary cell based on the first signaling.

In some embodiments, the terminal detects the SSB on the at least one secondary cell in response to receiving the first signaling.

As an implementation, the SSB on the at least one secondary cell is transmitted based on first SSB configuration information.

The first SSB configuration information includes at least one of the following: an SSB transmission period, a number of SSB repetitions, an SSB subcarrier spacing, an index of an SSB, SSB transmit power, or an SSB time-domain offset.

Exemplarily, the SSB time-domain offset is an interval between a slot where the first signaling is located and a slot for SSB transmission.

In some embodiments, the first SSB configuration information is configured by the RRC signaling; or, the first SSB configuration information is configured by a system information block (SIB); or, the first SSB configuration information is predefined. The SIB may be an SIB1 or other system information (OSI) other than the SIB1.

As another implementation, the SSB on the at least one secondary cell is transmitted based on the first SSB configuration information within a first time period.

In some embodiments, a starting point of the first time period is determined according to at least one of the following: a transmission time of the first signaling or a first time offset.

Exemplarily, the starting point of the first time period may be determined only according to the transmission time of the first signaling. For example, the starting point of the first time period may be the time when the first signaling is received. For another example, the starting point of the first time period may be the time when the reception of the first signaling is completed.

In yet another example, the starting point of the first time period may be determined only according to the first time offset. For example, the starting point of the first time period may be the time corresponding to the first time offset after SSB transmission starts. Taking the time to start SSB transmission as T and the first time offset as P as an example, the starting point of the first time period is T+P.

In yet another example, the starting point of the first time period may be determined according to the transmission time of the first signaling and the first time offset. For example, the starting point of the first time period may be the time corresponding to the first time offset after the reception of the first signaling. For another example, the starting point of the first time period may be the time corresponding to the first time offset after the reception of the first signaling is completed.

As an implementation, the first time offset is determined according to at least one of the following: a predefined time period, RRC signaling, an SIB1, or a master information block (MIB).

Exemplarily, the first time offset may be a predefined time period. Alternatively, the first time offset may be configured by the RRC signaling; or, the first time offset may be configured by the SIB1; or, the first time offset may be configured by the MIB.

In some embodiments, an end point of the first time period is a moment corresponding to completion of activation of at least one secondary cell; or, the end point of the first time period is a moment corresponding to successful reporting of channel state information (CSI) by at least one secondary cell; or, the end point of the first time period is determined according to a preset time period.

Exemplarily, the end point of the first time period may be the time corresponding to the predefined time period after the starting point of the first time period. For example, if the starting point of the first time period is T and the predefined time period is P, the end point of the first time period is T + P.

It should be understood that in a case where the end point of the first time period is the moment corresponding to completion of the activation of the at least one secondary cell, the first SSB configuration information is valid within the moment corresponding to completion of the activation of the at least one secondary cell. In a case where the end point of the first time period is the moment corresponding to the successful reporting of the channel state information (CSI) by the at least one secondary cell, the first SSB configuration information is valid within the moment corresponding to the successful reporting of the channel state information (CSI) by the at least one secondary cell.

It should be noted that the first SSB configuration information is always valid after SSB transmission on the at least one secondary cell is triggered, or is only valid within the first time period. The first time period is located within a time period corresponding to an activation process of at least one secondary cell; or, the first time period may also be a predefined time period.

In some embodiments, after the first SSB configuration information becomes invalid, SSB transmission is performed based on switching to second SSB configuration information.

Exemplarily, SSB transmission is performed by using the first SSB configuration information before the activation of the at least one secondary cell is completed or before the successful reporting of the channel state information (CSI) by the at least one secondary cell. SSB transmission is performed by using the second SSB configuration information after the activation of the at least one secondary cell is completed or after the successful reporting of the channel state information (CSI) by the at least one secondary cell.

The SSB transmission period in the first SSB configuration information is different from that in the second SSB configuration information. For example, the SSB transmission period in the first SSB configuration information is 5 ms, and the SSB transmission period in the second SSB configuration information is 160 ms.

Exemplarily, when the terminal receives the first signaling, activates at least one secondary cell, and triggers SSB transmission on the at least one secondary cell, SSB transmission is performed according to the 5 ms SSB transmission period in the first SSB configuration information. After the activation of the at least one secondary cell is completed or after the successful reporting of the channel state information (CSI) by the at least one secondary cell, SSB transmission is performed according to the 160 ms SSB transmission period in the second SSB configuration information.

It should be noted that after the first SSB configuration information becomes invalid, there may be no SSB that needs to be transmitted unless SSB transmission is triggered again; or, the first SSB configuration information remains valid until new SSB configuration information is received.

In this way, the SSB is transmitted with one type of configuration information before secondary cell activation and with another type of configuration information after the activation, thereby achieving on-demand SSB transmission and reducing transmission energy consumption.

As an implementation, the terminal detects the SSB on the at least one secondary cell within the first time period.

As another implementation, the terminal immediately detects the SSB on the at least one secondary cell after the reception of the first signaling.

In this way, the SSB can be transmitted on demand through the first signaling instead of being periodically transmitted. While meeting the transmission requirements of the terminal, the energy consumption of the base station can be reduced, thereby reducing the cost for the operators. Moreover, on-demand SSB transmission can improve the flexibility of SSB transmission, thereby improving the utilization efficiency of the network resources.

FIG. 14 illustrates a schematic flowchart of a signaling transmitting method according to the present disclosure. As shown in FIG. 14, the signaling transmitting method is applied to the base station 20 in FIG. 1, including the following steps:
S201: transmit first signaling.

The first signaling is configured to trigger transmission of at least one synchronization signal/physical broadcast channel block (SSB) on at least one secondary cell. The first signaling includes at least one of the following: radio resource control (RRC) signaling, a media access control control element (MAC CE), or downlink control information.

In some embodiments, the MAC CE is an existing MAC CE configured to activate or deactivate a secondary cell.

A reserved bit in the MAC CE is configured to indicate that SSB transmission is performed on a secondary cell to be activated. A first bit field in the MAC CE is configured to indicate that SSB transmission is performed on the secondary cell to be activated.

In some embodiments, the MAC CE includes at least one of the following: a second bit field, a third bit field, a fourth bit field, a fifth bit field, a sixth bit field, or a reserved bit field. The second bit field includes an activation indication or a deactivation indication for at least one secondary cell; the third bit field includes an activation indication or a deactivation indication; the fourth bit field includes an identifier of a secondary cell; the fifth bit field includes an indication of an SSB pattern; and the sixth bit field is configured to indicate whether there is an aperiodic positioning reference signal to be activated on the secondary cell to be activated.

The third bit field is configured to indicate at least one of the following: activating or deactivating an associated secondary cell, or activating or deactivating SSB transmission on the associated secondary cell. The SSB pattern includes at least one of the following: an SSB transmission period, a number of SSB repetitions, an SSB subcarrier spacing, an index of an actually transmitted SSB, or SSB transmit power.

In some embodiments, the SSB on the at least one secondary cell is transmitted based on first SSB configuration information.

The first SSB configuration information includes at least one of the following: an SSB transmission period, a number of SSB repetitions, an SSB subcarrier spacing, an index of an SSB, SSB transmit power, or an SSB time-domain offset.

In some embodiments, the first SSB configuration information is configured by RRC signaling; or, the first SSB configuration information is configured by a system information block; or, the first SSB configuration information is predefined.

In some embodiments, transmission is performed on the at least one secondary cell based on the first SSB configuration information within a first time period.

In some embodiments, a starting point of the first time period is determined according to at least one of the following: a transmission time of the first signaling, or a first time offset. The first time offset is configured through RRC signaling; or, the first time offset is configured through an SIB1; or the first time offset is configured through an MIB; or the first time offset is predefined.

In some embodiments, an end point of the first time period is a moment corresponding to completion of activation of at least one secondary cell; or, the end point of the first time period is a moment corresponding to successful reporting of channel state information (CSI) by at least one secondary cell; or, the end point of the first time period is determined according to a preset time period.

In this way, through the first signaling, the SSB can be transmitted on demand instead of being periodically transmitted. While meeting transmission requirements of a terminal, the energy consumption of the base station can be reduced, thereby reducing the cost for operators. Moreover, on-demand SSB transmission can improve the flexibility of SSB transmission, thereby improving a utilization efficiency of network resources.

It may be understood that, in order to implement the foregoing functions, a communication apparatus includes hardware structures and/or software modules corresponding to the execution of various functions. Those skilled in the art should readily recognize that, in combination with the algorithm steps of each example described in the embodiments of the present disclosure, the present disclosure can be implemented in the form of hardware or a combination of hardware and computer software. Whether a certain function is performed by hardware or by computer software driving hardware depends on specific applications and design constraints of the technical solutions. Those skilled in the art may use different methods to implement the described functions for each particular application, but such implementation should not be considered as going beyond the scope of the present disclosure.

In the embodiments of the present disclosure, functional module division may be performed on the communication apparatus according to the foregoing method embodiments. For example, division for each functional module may be corresponding to each function, or two or more functions may be integrated into one functional module. The foregoing integrated module may be implemented in the form of hardware or in the form of software. It should be noted that the division for the modules in the embodiments of the present disclosure is illustrative, and is merely a logical function division, and additional division methods may be adopted in practical implementation. The following uses the division for each functional module corresponding to each function as an example for illustration.

FIG. 15 is a schematic structural diagram of a communication apparatus applied to a terminal according to an embodiment of the present disclosure. The communication apparatus 150 may perform the signaling receiving method provided in the foregoing method embodiment. As shown in FIG. 15, the communication apparatus 150 includes a communication module 1501 and a processing module 1502.

The communication module 1501 is configured to receive first signaling, the first signaling being configured to trigger transmission of at least one synchronization signal/physical broadcast channel block (SSB) on at least one secondary cell.

The processing module 1502 is configured to detect the SSB on the at least one secondary cell based on the first signaling.

In some embodiments, the first signaling includes at least one of the following: radio resource control (RRC) signaling, a media access control control element (MAC CE), or downlink control information.

In some embodiments, the MAC CE is an existing MAC CE configured to activate or deactivate a secondary cell.

In some embodiments, a reserved bit in the MAC CE is configured to indicate that SSB transmission is performed on a secondary cell to be activated.

In some embodiments, a first bit field in the MAC CE is configured to indicate that SSB transmission is performed on a secondary cell to be activated.

In some embodiments, the MAC CE includes at least one of the following: a second bit field, a third bit field, a fourth bit field, a fifth bit field, a sixth bit field, or a reserved bit field. The second bit field includes an activation indication or a deactivation indication for at least one secondary cell; the third bit field includes an activation indication or a deactivation indication; the fourth bit field includes an identifier of at least one secondary cell; the fifth bit field includes an indication of an SSB pattern; and the sixth bit field is configured to indicate whether there is an aperiodic positioning reference signal to be activated on the secondary cell to be activated.

In some embodiments, the third bit field is configured to indicate at least one of the following: activating or deactivating an associated secondary cell, or activating or deactivating SSB transmission on the associated secondary cell.

In some embodiments, the SSB pattern includes at least one of the following: an SSB transmission period, a number of SSB repetitions, an SSB subcarrier spacing, an index of an actually transmitted SSB, or SSB transmit power.

In some embodiments, the SSB on the at least one secondary cell is transmitted based on first SSB configuration information; and the first SSB configuration information includes at least one of the following: an SSB transmission period, a number of SSB repetitions, an SSB subcarrier spacing, an index of an SSB, SSB transmit power, or an SSB time-domain offset.

In some embodiments, the first SSB configuration information is configured by RRC signaling; or, the first SSB configuration information is configured by a system information block; or, the first SSB configuration information is predefined.

In some embodiments, the SSB on the at least one secondary cell being transmitted based on first SSB configuration information includes: performing transmission on the at least one secondary cell based on the first SSB configuration information within a first time period.

In some embodiments, a starting point of the first time period is determined according to at least one of the following: a transmission time of the first signaling, or a first time offset; and the first time offset is determined according to at least one of the following: a predefined time period, RRC signaling, an SIB1, or a MIB.

In some embodiments, an end point of the first time period is a moment corresponding to completion of activation of at least one secondary cell; or, the end point of the first time period is a moment corresponding to successful reporting of channel state information (CSI) by at least one secondary cell; or, the end point of the first time period is determined according to a preset time period.

In some embodiments, the processing module 1502 is configured to detect the SSB on the at least one secondary cell within the first time period.

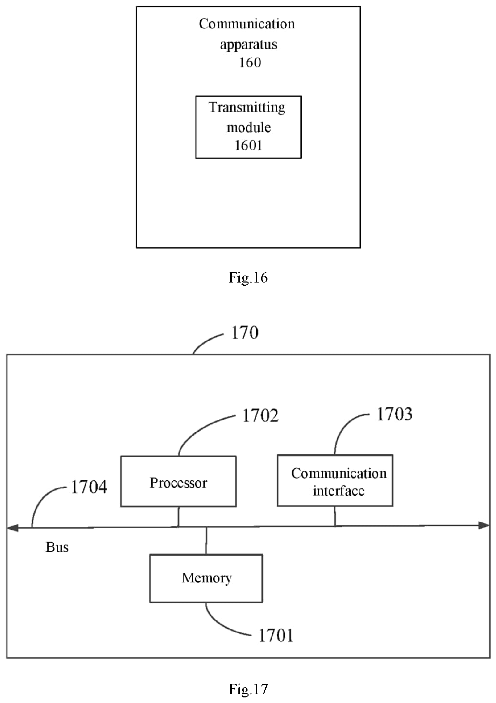

FIG. 16 is a schematic structural diagram of a communication apparatus applied to a base station according to an embodiment of the present disclosure. The communication apparatus 160 may perform the signaling transmitting method provided in the foregoing method embodiment. As shown in FIG. 16, the communication apparatus 160 includes a transmitting module 1601.

The transmitting module 1601 is configured to transmit first signaling, the first signaling being configured to trigger transmission of at least one synchronization signal/physical broadcast channel block (SSB) on at least one secondary cell.

In some embodiments, the first signaling includes at least one of the following: radio resource control (RRC) signaling, a media access control control element (MAC CE), or downlink control information.

In some embodiments, the MAC CE is an existing MAC CE configured to activate or deactivate a secondary cell.

In some embodiments, a reserved bit in the MAC CE is configured to indicate that SSB transmission is performed on a secondary cell to be activated.

In some embodiments, a first bit field in the MAC CE is configured to indicate that SSB transmission is performed on a secondary cell to be activated.

In some embodiments, the MAC CE includes at least one of the following: a second bit field, a third bit field, a fourth bit field, a fifth bit field, a sixth bit field, or a reserved bit field. The second bit field includes an activation indication or a deactivation indication for at least one secondary cell; the third bit field includes an activation indication or a deactivation indication; the fourth bit field includes an identifier of a secondary cell; the fifth bit field includes an indication of an SSB pattern; and the sixth bit field is configured to indicate whether there is an aperiodic positioning reference signal to be activated on the secondary cell to be activated.

In some embodiments, the third bit field is configured to indicate at least one of the following: activating or deactivating an associated secondary cell, or activating or deactivating SSB transmission on the associated secondary cell.

In some embodiments, the SSB pattern includes at least one of the following: an SSB transmission period, a number of SSB repetitions, an SSB subcarrier spacing, an index of an actually transmitted SSB, or SSB transmit power.

In some embodiments, the SSB on the at least one secondary cell is transmitted based on first SSB configuration information; and the first SSB configuration information includes at least one of the following: an SSB transmission period, a number of SSB repetitions, an SSB subcarrier spacing, an index of an SSB, SSB transmit power, or an SSB time-domain offset.

In some embodiments, the first SSB configuration information is configured by RRC signaling; or, the first SSB configuration information is configured by a system information block; or, the first SSB configuration information is predefined.

In some embodiments, the SSB on the at least one secondary cell being transmitted based on first SSB configuration information includes: performing transmission on the at least one secondary cell based on the first SSB configuration information within a first time period.

In some embodiments, a starting point of the first time period is determined according to at least one of the following: a transmission time of the first signaling, or a first time offset. The first time offset is configured through RRC signaling; or, the first time offset is configured through an SIB1; or the first time offset is configured through a MIB; or the first time offset is predefined.

In some embodiments, an end point of the first time period is a moment corresponding to completion of activation of at least one secondary cell; or, the end point of the first time period is a moment corresponding to successful reporting of channel state information (CSI) by at least one secondary cell; or, the end point of the first time period is determined according to a preset time period.

In a case where the functions of the foregoing integrated modules are implemented in the form of hardware, an embodiment of the present disclosure provides another possible structure of the communication apparatus involved in the foregoing embodiments. As shown in FIG. 17, the communication apparatus 170 includes: a processor 1702 and a bus 1704. In some embodiments, the communication apparatus 170 may further include a memory 1701. In some embodiments, the communication apparatus 170 may further include a communication interface 1703.

The processor 1702 may implement or execute various exemplary logic blocks, modules, and circuits described in combination with the embodiments of the present disclosure. The processor 1702 may be a central processing unit, a general-purpose processor, a digital signal processor, an application-specific integrated circuit, a field-programmable gate array or another programmable logic device, a transistor logic device, a hardware component, or any combination thereof. The processor 1702 may implement or execute various exemplary logic blocks, modules, and circuits described in combination with the embodiments of the present disclosure. The processor 1702 may also be a combination that implements a computing function, such as a combination including one or more microprocessors, or a combination of a digital signal processor (DSP) and a microprocessor.

The communication interface 1703 is configured to connect with other devices through a communication network. The communication network may be Ethernet, a radio access network, a wireless local area network (WLAN), or the like.

The memory 1701 may be a read-only memory (ROM) or other types of static storage devices capable of storing static information and instructions, or may be a random access memory (RAM) or other types of dynamic storage devices capable of storing dynamic information and instructions, or may also be an electrically erasable programmable read-only memory (EEPROM), a magnetic disk storage medium or other magnetic storage devices, or any other medium capable of being configured to carry or store desired program code in the form of instructions or data structures and capable of being accessed by a computer, but is not limited thereto.

As an implementation, the memory 1701 may exist independently of the processor 1702, and the memory 1701 may be connected to the processor 1702 through the bus 1704 for storing instructions or program code. When the processor 1702 invokes and executes the instructions or program code stored in the memory 1701, the signaling receiving method or the signaling transmitting method according to the embodiments of the present disclosure can be implemented.

In another implementation, the memory 1701 may also be integrated with the processor 1702.

The bus 1704 may be an extended industry standard architecture (EISA) bus, or the like. The bus 1704 may be classified as an address bus, a data bus, a control bus, or the like. To facilitate representation, only one bold line is used in FIG. 17 for representation, but it does not imply that there is only one bus or one type of bus.

Some embodiments of the present disclosure provide a computer-readable storage medium (e.g., a non-transitory computer-readable storage medium). The computer-readable storage medium has computer program instructions stored therein. The computer program instructions, when running on a computer, cause the computer to perform the signaling receiving method or the signaling transmitting method according to any one of the foregoing embodiments.

Exemplarily, the computer-readable storage medium may include, but is not limited to: a magnetic storage device (e.g., a hard disk, a floppy disk, or a magnetic tape), an optical disc (e.g., a compact disk (CD), or a digital versatile disk (DVD)), a smart card, and a flash memory device (e.g., an erasable programmable read-only memory (EPROM), a card, a stick, or a key drive).The various computer-readable storage media described in the present disclosure may represent one or more devices and/or other machine-readable storage media configured to store information. The term "machine-readable storage medium" may include, but is not limited to, wireless channels and various other media capable of storing, containing, and/or carrying instructions and/or data.

An embodiment of the present disclosure provides a computer program product including instructions. The computer program product, when running on a computer, causes the computer to perform the signaling receiving method or the signaling transmitting method according to any one of the foregoing embodiments.

The above are merely specific implementations of the present disclosure. However, the scope of protection of the present disclosure is not limited thereto. Any changes or substitutions within the technical scope disclosed in the present disclosure shall be covered by the scope of protection of the present disclosure. Therefore, the scope of protection of the present disclosure should be based on the scope of protection of the claims.

## Claims

1. A signaling receiving method, comprising:
receiving first signaling, the first signaling being configured to trigger transmission of at least one synchronization signal/physical broadcast channel block (SSB) on at least one secondary cell; and
detecting the at least one SSB on the at least one secondary cell based on the first signaling.

2. The method according to claim 1, wherein the first signaling comprises at least one of the following: radio resource control (RRC) signaling, a media access control control element (MAC CE), or downlink control information.

3. The method according to claim 2, wherein the MAC CE is an existing MAC CE configured to activate or deactivate a secondary cell.

4. The method according to claim 3, wherein a reserved bit in the MAC CE is configured to indicate that SSB transmission is performed on a secondary cell to be activated.

5. The method according to claim 3, wherein a first bit field in the MAC CE is configured to indicate that SSB transmission is performed on a secondary cell to be activated.

6. The method according to claim 2, wherein the MAC CE comprises at least one of the following: a second bit field, a third bit field, a fourth bit field, a fifth bit field, a sixth bit field, or a reserved bit field, and
wherein the second bit field comprises an activation indication or a deactivation indication for at least one secondary cell;
the third bit field comprises an activation indication or a deactivation indication;
the fourth bit field comprises an identifier of the at least one secondary cell;
the fifth bit field comprises an indication of an SSB pattern; and
the sixth bit field is configured to indicate whether there is an aperiodic positioning reference signal to be activated on a secondary cell to be activated.

7. The method according to claim 6, wherein the third bit field is configured to indicate at least one of the following: activating or deactivating an associated secondary cell, or activating or deactivating SSB transmission on the associated secondary cell.

8. The method according to claim 6, wherein the SSB pattern comprises at least one of the following: an SSB transmission period, a number of SSB repetitions, an SSB subcarrier spacing, an index of an actually transmitted SSB, or SSB transmit power.

9. The method according to claim 1, wherein the at least one SSB on the at least one secondary cell is transmitted based on first SSB configuration information, and wherein the first SSB configuration information comprises at least one of the following: an SSB transmission period, a number of SSB repetitions, an SSB subcarrier spacing, an index of the SSB, SSB transmit power, or an SSB time-domain offset.

10. The method according to claim 9, wherein the first SSB configuration information is configured by RRC signaling; or, the first SSB configuration information is configured by a system information block; or, the first SSB configuration information is predefined.

11. The method according to claim 9, wherein the at least one SSB on the at least one secondary cell being transmitted based on first SSB configuration information comprises:
performing transmission on the at least one secondary cell based on the first SSB configuration information within a first time period.

12. The method according to claim 11, wherein a starting point of the first time period is determined according to at least one of the following: a transmission time of first signaling or a first time offset, wherein the first time offset is determined according to at least one of the following: a predefined time period, RRC signaling, a system information block (SIB)1, or a main information block (MIB).

13. The method according to claim 11, wherein an end point of the first time period is a moment corresponding to completion of activation of the at least one secondary cell; or, the end point of the first time period is a moment corresponding to successful reporting of channel state information (CSI) by the at least one secondary cell; or, the end point of the first time period is determined according to a preset time period.

14. The method according to claim 1, wherein the detecting the at least one SSB on the at least one secondary cell based on the first signaling comprises:
detecting the at least one SSB on the at least one secondary cell within a first time period.

15. A signaling transmitting method, comprising:
transmitting first signaling, the first signaling being configured to trigger transmission of at least one synchronization signal/physical broadcast channel block (SSB) on at least one secondary cell.

16. The method according to claim 15, wherein the first signaling comprises at least one of the following: radio resource control (RRC) signaling, a media access control control element (MAC CE), or downlink control information.

17. The method according to claim 16, wherein the MAC CE is an existing MAC CE configured to activate or deactivate a secondary cell.

18. The method according to claim 17, wherein a reserved bit in the MAC CE is configured to indicate that SSB transmission is performed on a secondary cell to be activated.

19. The method according to claim 17, wherein a first bit field in the MAC CE is configured to indicate that SSB transmission is performed on a secondary cell to be activated.

20. The method according to claim 16, wherein the MAC CE comprises at least one of the following: a second bit field, a third bit field, a fourth bit field, a fifth bit field, a sixth bit field, or a reserved bit field, and
wherein the second bit field comprises an activation indication or a deactivation indication for at least one secondary cell;
the third bit field comprises an activation indication or a deactivation indication;
the fourth bit field comprises an identifier of the secondary cell;
the fifth bit field comprises an indication of an SSB pattern; and
the sixth bit field is configured to indicate whether there is an aperiodic positioning reference signal to be activated on a secondary cell to be activated.

21. The method according to claim 20, wherein the third bit field is configured to indicate at least one of the following: activating or deactivating an associated secondary cell, or activating or deactivating SSB transmission on the associated secondary cell.

22. The method according to claim 20, wherein the SSB pattern comprises at least one of the following: an SSB transmission period, a number of SSB repetitions, an SSB subcarrier spacing, an index of an actually transmitted SSB, or SSB transmit power.

23. The method according to claim 15, wherein the at least one SSB on the at least one secondary cell is transmitted based on first SSB configuration information, and wherein the first SSB configuration information comprises at least one of the following: an SSB transmission period, a number of SSB repetitions, an SSB subcarrier spacing, an index of the SSB, SSB transmit power, or an SSB time-domain offset.

24. The method according to claim 23, wherein the first SSB configuration information is configured by RRC signaling; or, the first SSB configuration information is configured by a system information block; or, the first SSB configuration information is predefined.

25. The method according to claim 23, wherein the at least one SSB on the at least one secondary cell being transmitted based on first SSB configuration information comprises:
performing transmission on the at least one secondary cell based on the first SSB configuration information within a first time period.

26. The method according to claim 25, wherein a starting point of the first time period is determined according to at least one of the following: a transmission time of first signaling or a first time offset, and wherein the first time offset is configured through RRC signaling; or, the first time offset is configured through a system information block (SIB)1; or the first time offset is configured through a main information block (MIB); or the first time offset is predefined.

27. The method according to claim 25, wherein an end point of the first time period is a moment corresponding to completion of activation of the at least one secondary cell; or, the end point of the first time period is a moment corresponding to successful reporting of channel state information (CSI) by the at least one secondary cell; or, the end point of the first time period is determined according to a preset time period.

28. A communication apparatus, comprising a processor, the processor, when executing a computer program, implementing the signaling receiving method according to any one of claims 1 to 14, or implementing the signaling transmitting method according to any one of claims 15 to 27.

29. A computer-readable storage medium, wherein the computer-readable storage medium comprises computer instructions, and the computer instructions, when executed, implementing the signaling receiving method according to any one of claims 1 to 14, or implementing the signaling transmitting method according to any one of claims 15 to 27.
